# EUROPÄISCHE PATENTSCHRIFT

(11) **EP 1 993 178 B1**
(45) Veröffentlichungstag und Bekanntmachung des Hinweises auf die Patenterteilung: **11.10.2017**
(21) Anmeldenummer: 08008474.2
(22) Anmeldetag: 06.05.2008
(51) Int. Cl.: H02G 3/04

(54) **Formteile zur Kaschierung von Schnittkanten an Kabelkanälen**
Preformed parts for the masking of trimmed edges at cable conduits
Embout pour dissimuler les arrêtes de coupes de conduit de câbles

(30) Priorität: 15.05.2007 DE 202007006989 U
(43) Veröffentlichungstag der Anmeldung: 19.11.2008
(73) Patentinhaber: Tehalit GmbH, 67716 Heltersberg (DE)
(72) Erfinder: Layes, Peter, 67716 Heltersberg (DE)
(74) Vertreter: Nuss, Laurent

(56) Entgegenhaltungen:
- EP-A1- 0 849 851
- EP-A1- 1 229 624
- EP-A2- 1 775 813
- AU-A- 7 215 374
- FR-A- 1 376 369
- FR-A1- 2 731 496
- FR-A1- 2 853 150
- GB-A- 2 362 270
- GB-A- 2 421 122
- US-A- 4 077 434
- US-A1- 2005 217 883
- US-B1- 6 348 658

## Beschreibung

Die vorliegende Erfindung betrifft ein Schnittkaschierungssystem zur Kaschierung von aneinander stoßenden Abschnitten eines Kabelkanals gemäß dem Oberbegriff des Anspruchs 1.

Kabelkanäle bestehen üblicherweise aus einem U-förmigen Unterteil und einem darauf aufsetzbaren, lösbaren Deckel und dienen der Aufnahme von darin verlaufenden Kabeln und Leitungen. Derartige Kabelkanäle werden oft entsprechend der benötigten Länge auf der Montagestelle zurechtgeschnitten. Bei größeren Montageflächen (wie z. B. einer Wand oder einem Boden) ergibt sich das Problem, dass mehrere Abschnitte eines Kabelkanals hintereinander angeordnet werden müssen, um eine Linie zu bilden, wodurch unschöne Stöße und Schnittkanten an den Berührungspunkten entstehen.

Zur Kaschierung dieser Schnittkanten dienen Formstücke, die auf den Kabelkanal aufgebracht werden. Für eine nachträgliche Installation ist es allerdings erforderlich, dass die Formstücke wie auch der Deckel jederzeit wieder lösbar sind. Üblicherweise erfolgt darum die Befestigung der Formstücke über einen Steck-, Rast- oder Schnappverschluss.

In der US 5,469,893 sind Formstücke (Winkelstücke, T-Stücke und Kreuzstücke) beschrieben, die aus einem U-förmigen Unterteil und einem lösbar aufsetzbaren flachen Deckel bestehen. Der Querschnitt dieser Formstücke ist exakt an den Querschnitt der anstoßenden Kanalabschnitte angepasst. Daher muss bei dieser Art von Schnittkaschierungen für jeden Kabelkanaltyp ein individueller Satz von Formteilen produziert, gelagert, transportiert, bestellt und montiert werden.

Aus der DE 295 10 836 U1 ist bekannt, die angrenzenden und auf Gehrung geschnittenen Kanalunterteile mit Hilfe eines eingeschobenen Blechwinkels exakt zueinander zu justieren, so dass sich ein optisch einwandfreies Bild ergibt. Allerdings ist das Schneiden der Kanalabschnitte auf Gehrung und das Montieren der Blechwinkel zeit- und kostenaufwändig und selbst geringe Anpassungen an die tatsächlichen Gegebenheiten auf der Baustelle sind nicht möglich.

In der DE 297 22 284 U1 wird ein Adapter beschrieben, der zwei Kabelkanäle mit unterschiedlichem Querschnitt miteinander verbinden kann. Teil des Adapters ist eine U-förmige Blende, die mit Hilfe einer federnden Halteleiste am Adapter fixiert werden kann. Die U-förmige Blende hat die Aufgabe, die Lücke zwischen den unterschiedlichen Kanalquerschnitten zu kaschieren. Nachteilig bei dieser Konstruktion ist jedoch, dass ein einfaches Lösen nicht möglich ist.

Die EP 1 775 813 A2 beschreibt ein Kabelkanalsystem mit Kaschierungen für die Kanaloberseite und seitlichen Abdeckungen.

Die GB 2 421 122 A, die EP 1 229 624 A1, die US 2005/0217883 A1, die US 4,077,434, EP 0 849 851 A1, FR 2 853 150 A1, US 6,348,658 B1 sowie FR 2 731 496 beschreiben ebenfalls unterschiedliche Lösungen um Schnittkanten, entweder über konstruktive Maßnahmen am Kabelkanal selbst oder über zusätzliche Bauteile zu kaschieren.

Der vorliegenden Erfindung liegt daher die Aufgabe zugrunde, einfache Formteile zur Verfügung zu stellen, mit denen ein schnelles und problemloses Kaschieren von Schnittkanten bei aufeinander stoßenden Kabelkanalabschnitten möglich ist.

Diese Aufgabe wird gelöst durch ein Schnittkaschierungssystem gemäß Anspruch 1.

Das erfindungsgemäße Schnittkaschierungssystem besteht aus einem Formteil zur Oberteilkaschierung und einem Formteil zur Seitenkaschierung.

Das Formteil zur Oberteilkaschierung umfasst einen bügelartig ausgestalteten Blendenkörper mit zwei am Fuß- und Kopfende nach unten geneigten Schenkeln, welche die Schnittkante von zwei aufeinander stoßenden Kabelkanalabschnitten von oben abdecken. An der Unterseite der Oberteilkaschierung ist ein Bügel angeformt, der an beiden Enden jeweils einen nach unten weisenden seitlichen Arm besitzt. Am unteren Ende des Armes ist ein Hakenprofil ausgebildet. Der Bügel und das Hakenprofil dienen der Verrastung mit dem Unterteil. Das Unterteil besitzt hierfür mit dem Hakenprofil kooperierende Formhalteprofile. Vorzugsweise sind die Formhalteprofile an die Deckelhalteprofile des Unterteils angeformt.

Das Formteil zur Seitenkaschierung umfasst einen Leistenkörper, an dessen Fußende ein Rastprofil ausgebildet ist. Das Rastprofil besteht vorzugsweise aus einem Trägerelement und einer Rastnase. Zur Kaschierung wird die Seitenkaschierung über die Rastnase von unten in die Formhalteprofile des Kabelkanalunterteils eingeführt und dann mit der Hand an das Unterteil gedrückt. Durch die Drehung verrastet die Rastnase mit den Formhalteprofilen. Auf diese Weise kann der Monteur - einfach und schnell - die seitliche Schnittkante kaschieren.

Die erfindungsgemäßen Oberteil- und Seitenkaschierungen sind leicht an einem Kanal anbringbar und bei Bedarf wieder lösbar. Dabei gibt es keine Montagefolge, d.h. es kann zunächst die Schnittkaschierung und dann der Deckel an dem Kanal angebracht werden oder umgekehrt.

Im Folgenden wird die Erfindung anhand ihrer Zeichnungen näher erläutert.

Es zeigen:
- Fig. 1: eine isometrische Darstellung der Oberteilkaschierung,
- Fig. 2: einen Querschnitt eines Kabelkanals mit daran angebrachter Oberteilkaschierung,
- Fig. 3: eine isometrische Darstellung der Seitenkaschierung,
- Fig. 4: das Anbringen der Seitenkaschierung an einen Kabelkanal, und
- Fig. 5: einen Querschnitt eines Kabelkanals mit daran angebrachter Seitenkaschierung.

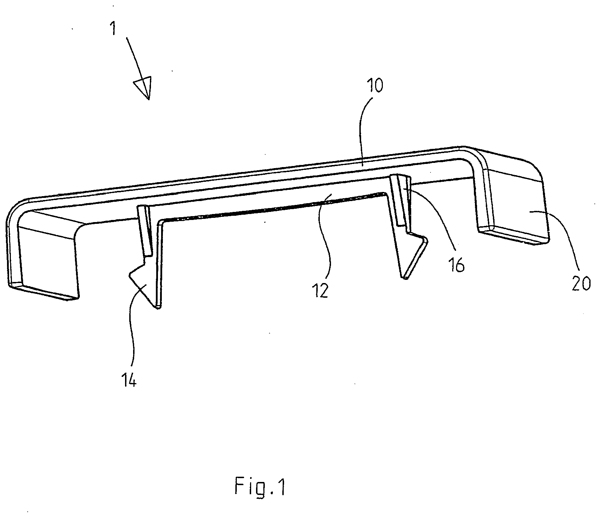

In Fig. 1 ist die erfindungsgemäße Oberteilkaschierung 1 gezeigt. Diese besteht aus einem Blendenkörper 10, der vorzugsweise leistenförmig ausgebildet ist. Die beiden Schenkel des Blendenkörpers 10 sind seitlich nach unten geneigt und bilden ein U-Profil. Durch den Blendenkörper 10 und die beiden nach unten geneigten Schenkel 20 wird die Schnittkante des Oberteils der aufeinander stoßenden Kabelkanalabschnitte kaschiert. Zur Fixierung der Oberteilkaschierung an dem Kanaldeckel ist an der Unterseite des Blendenkörpers 10 ein Bügel 12 angeformt. Dieser besteht aus zwei seitlich nach unten geneigten Armen 16, an deren Ende jeweils ein Hakenprofil 14 ausgebildet ist. Durch das Hakenprofil 14 findet eine Verrastung mit dem Unterteil statt. Die Arme 16 sind vorzugsweise leicht nach außen abgewinkelt.

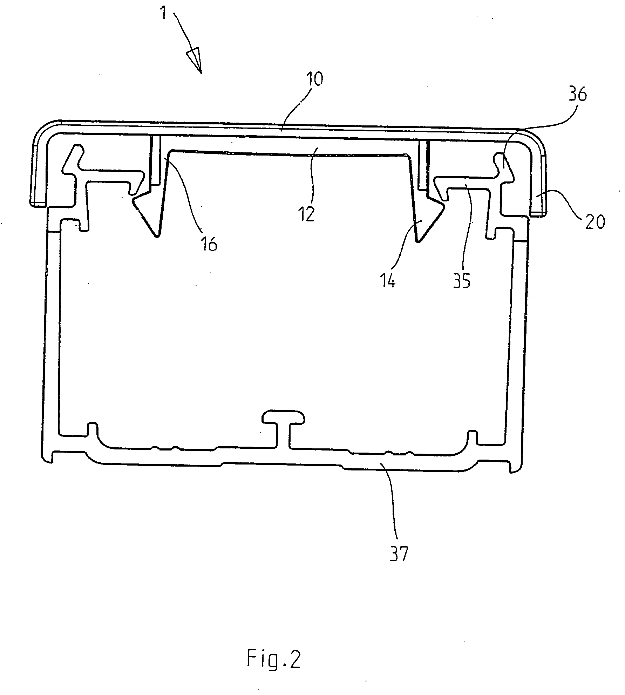

In Fig. 2 erkennt man die erfindungsgemäße Oberteilkaschierung 1, aufgesetzt auf ein Unterteil 37 eines Kabelkanals. An den Deckelhalteprofilen 36 sind U-förmige Formhalteprofile 35 ausgebildet, die mit dem Hakenprofil 14 kooperieren und eine Rastverbindung eingehen. In einer weiteren Ausführungsform kooperiert das Hakenprofil 14 direkt mit dem Deckelhalteprofil 36. Das Formhalteprofil 35 ist beidseitig am Unterteil 1 ausgebildet. Vorzugsweise ist in dieser Berührungsform das Formhalteprofil 35 direkt an dem Deckelhalteprofil 36 angeformt.

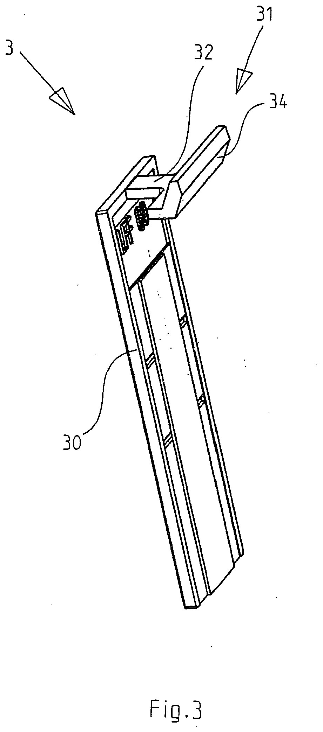

In Fig. 3 erkennt man die erfindungsgemäße Seitenkaschierung 3 in isometrischer Darstellung. Diese besteht aus einem Leistenkörper 30 und einem am Fußende des Leistenkörpers 30 ausgebildeten Rastprofil 31. Das Rastprofil 31 besteht im Wesentlichen aus einem Trägerelement 32 und einer Rastnase 34. Mit dem Rastprofil 31 wird die Seitenkaschierung 3 mit dem Unterteil des Kabelkanals verrastet. Die Rastnase 34 ist für das Eingreifen in die Formhalteprofile 35 des Unterteils gegenüber dem Leistenkörper 30 vorzugsweise um einen Winkel von mehr als 90° nach außen abgewinkelt.

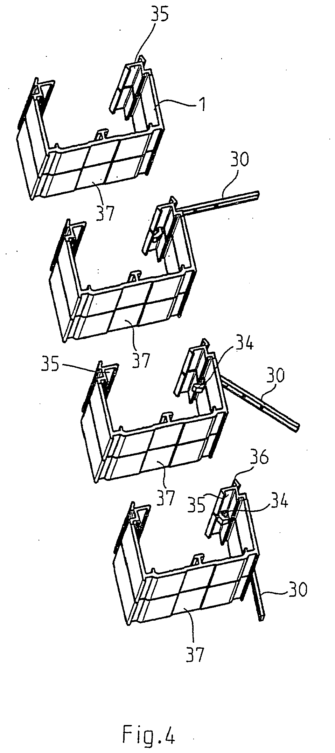

In Fig. 4 ist die Befestigung der Seitenkaschierung 3 gezeigt. Hierbei wird die Rastnase 34 des Leistenkörpers 30 zunächst seitlich zum Kabelführungskanal in das Formhalteprofil 35 eingeführt. Anschließend wird der Leistenkörper 30 nach unten zur Kanalwand gedrückt, wodurch die Rastnase 34 von unten in das Formhalteprofil 35 greift. Auf diese Weise wird der Leistenkörper 30 fest und unverschiebbar mit dem Unterteil 37 verbunden und ein sicherer Sitz der Kaschierung sichergestellt.

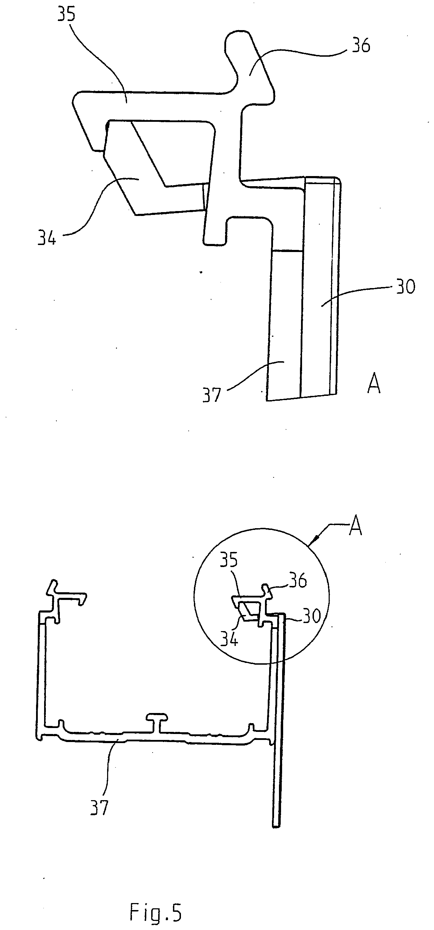

In Fig. 5 ist die Seitenkaschierung 3 an ein Kanalunterteil 37 angebracht. Man erkennt, wie die Rastnase 34 im eingesetzten Zustand mit den Formhalteprofil 35 kooperiert. Das Formhalteprofil 35 und die Rastnase 34 sind abgewinkelt und bilden in dieser Position eine Linie. Zum Herausnehmen der Seitenkaschierung 3 wird der Leistenkörper 30 einfach nach oben gedrückt, so dass die Rastnase 34 über die Außenlippe des Formhalteprofils 35 gleitet und die Seitenkaschierung 3 aus der Rastverriegelung entlässt.

Die erfindungsgemäße Seitenkaschierung 3 ist für verschiedene Kabelkanaltypen einsetzbar. Etwaige überhängende Enden des Leistenkörpers 30 können einfach abgeschnitten werden. Durch den leicht lösbaren Rastverschluss ist eine einfache und schnelle Kaschierung auf der Baustelle durch den Installateur möglich. Zusammen mit der Oberteilkaschierung können auf diese Weise Schnittkanten an dem Oberteil und den Seitenteilen der Kabelkanalabschnitte kaschiert werden. Gegenüber umgreifenden Kaschierungslösungen bietet die erfindungsgemäße modulare Schnittkaschierung mit getrennter Oberteil- und Seitenkaschierung die größtmögliche Flexibilität, da selten der Schnitt an der Oberseite an der gleichen Position liegt wie ein Schnitt an der Seite des Kanals.

## Patentansprüche

1. Schnittkaschierungssystem zur Kaschierung von Schnittkanten aufeinander stoßender Kabelkanalabschnitte eines Kabelkanals mit einem Kanalunterteil (37) und einem Oberteil, bestehend aus
- einem Formteil (1) zur Oberteilkaschierung, bestehend aus einem bügelartig ausgestalteten, leistenförmigen Blendenkörper (10) mit zwei am Kopfende und Fußende nach unten geneigten seitlichen Schenkeln (20), die mit dem Blendenkörper (10) ein U-Profil bilden, und
- einem Formteil (3) zur Seitenkaschierung des Kanalunterteils (37), bestehend aus einem Leistenkörper (30), an dessen Fußende ein Rastprofil (31) ausgebildet ist, wobei das Rastprofil (31) aus einem Trägerelement (32) und wenigstens einer Rastnase (34) besteht, **dadurch gekennzeichnet, dass** an dem Formteil (1) zur Oberteilkaschierung an der Unterseite des Blendenkörpers (10) ein Bügel (12) mit zwei seitlich nach unten geneigten Armen (16) ausgeformt ist, an deren Ende sich jeweils ein Hakenprofil (14) befindet, das mit Formhalteprofilen (35) des Kanalunterteils (37) kooperiert und bei dem Formteil (3) zur Seitenkaschierung die Rastnase (34) des Leistenkörpers (30) von unten in die Formhalteprofile (35) des Kanalunterteils (37) einführbar und durch Drehung mit den Formhalteprofilen (35) verrastbar ist.

2. Schnittkaschierungssystem nach Anspruch 1, **dadurch gekennzeichnet, dass** die Rastnase (34) gegenüber dem Leistenkörper (30) um mehr als 90° nach außen abgewinkelt ist.

3. Schnittkaschierungssystem nach einem der vorhergehenden Ansprüche, **dadurch gekennzeichnet, dass** die Arme (16) des Bügels (12) leicht nach außen geneigt sind.

4. Schnittkaschierungssystem nach einem der vorhergehenden Ansprüche, **dadurch gekennzeichnet, dass** das Hakenprofil (14) mit einem Formhalteprofil (35) eines Kanalunterteils (37) kooperiert.

5. Schnittkaschierungssystem nach einem der vorhergehenden Ansprüche, **dadurch gekennzeichnet, dass** das Formhalteprofil (35) an dem Deckelhalteprofil (36) eines Kanalunterteils (37) ausgeformt ist.

## Claims

1. Cut-concealing system for concealing cut edges of abutting cable duct sections of a cable duct having a duct lower part (37) and an upper part, comprising
- a shaped part (1) for upper part concealment, comprising a strip-shaped masking body (10) of stirrup-like design with two lateral legs (20) which are inclined downwards at the head end and foot end and which form a U-profile with the masking body (10), and
- a shaped part (3) for lateral concealment of the duct lower part (37), comprising a strip body (30) on whose foot end a latching profile (31) is formed, wherein the latching profile (31) comprises a carrier element (32) and at least one latching lug (34), **characterized in that** there is formed on the shaped part (1) for upper part concealment, on the underside of the masking body (10), a stirrup (12) with two arms (16) which are inclined laterally downwards and on the end of which there is situated a respective hook profile (14) which cooperates with shaped holding profiles (35) of the duct lower part (37), and, in the case of the shape part (3) for lateral concealment, the latching lug (34) of the strip body (30) can be inserted from below into the shaped holding profiles (35) of the duct lower part (37) and latched with the shaped holding profiles (35) by rotation.

2. Cut-concealing system according to claim 1, **characterized in that** the latching lug (34) is angled outwardly by more than 90° with respect to the strip body (30).

3. Cut-concealing system according to one of the preceding claims, **characterized in that** the arms (16) of the stirrup (12) are inclined slightly outwards.

4. Cut-concealing system according to one of the preceding claims, **characterized in that** the hook profile (14) cooperates with a shaped holding profile (35) of a duct lower part (37).

5. Cut-concealing system according to one of the preceding claims, **characterized in that** the shaped holding profile (35) is formed on the cover holding profile (36) of a duct lower part (37).

## Revendications

1. Système de masquage de coupe pour masquer les arêtes de coupe de tronçons de canalisations de câbles mis bout à bout d'une canalisation de câbles comportant une partie inférieure de canalisation (37) et une partie supérieure, composé
- d'une pièce moulée (1) de masquage de la partie supérieure, composée d'un corps formant écran (10) en forme de barrette, conformé en étrier, avec deux branches latérales (20) inclinées vers le bas à l'extrémité de tête et l'extrémité de pied, qui forment avec le corps formant écran (10) un profil en U, et
- d'une pièce moulée (3) de masquage latéral de la partie inférieure de canalisation (37), composée d'un corps de barrette (30) à l'extrémité de pied duquel est formé un profil d'encliquetage (31), le profil d'encliquetage (31) étant composé d'un élément porteur (32) et d'au moins un ergot d'encliquetage (34),
**caractérisé en ce que**
sur la pièce moulée (1) de masquage de la partie supérieure, sur la face inférieure du corps formant écran (10), est formé un étrier (12) avec deux bras (16) inclinés latéralement vers le bas, à chaque extrémité desquels se trouve un profil en crochet (14) qui coopère avec des profils de retenue par forme (35) de la partie inférieure de canalisation (37) et que sur la pièce moulée (3) de masquage latéral, l'ergot d'encliquetage (34) du corps de barrette (30) peut être introduit par le bas dans les profils de retenue par forme (35) de la partie inférieure de canalisation (37) et encliqueté par rotation avec les profils de retenue par forme (35).

2. Système de masquage de coupe selon la revendication 1, **caractérisé en ce que** l'ergot d'encliquetage (34) est incliné vers l'extérieur de plus de 90° par rapport au corps de barrette (30).

3. Système de masquage de coupe selon l'une des revendications précédentes, **caractérisé en ce que** les bras (16) de l'étrier (12) sont légèrement inclinés vers l'extérieur.

4. Système de masquage de coupe selon l'une des revendications précédentes, **caractérisé en ce que** le profil en crochet (14) coopère avec un profil de retenue par forme (35) d'une partie inférieure de canalisation (37).

5. Système de masquage de coupe selon l'une des revendications précédentes, **caractérisé en ce que** le profil de retenue par forme (35) est formé sur le profil de retenue de couvercle (36) d'une partie inférieure de canalisation (37).
